(19) Europäisches Patentamt
European Patent Office
Office européen des brevets

(11) Veröffentlichungsnummer: **0 163 598**
**B1**

(12) # EUROPÄISCHE PATENTSCHRIFT

(45) Veröffentlichungstag der Patentschrift: **04.10.89**

(51) Int. Cl.⁴: **A 01 N 25/04**

(21) Anmeldenummer: **85810179.3**

(22) Anmeldetag: **22.04.85**

(54) **Herbizide Zusammensetzungen.**

(30) Priorität: **27.04.84 CH 2060/84**

(43) Veröffentlichungstag der Anmeldung: **04.12.85 Patentblatt 85/49**

(45) Bekanntmachung des Hinweises auf die Patenterteilung: **04.10.89 Patentblatt 89/40**

(84) Benannte Vertragsstaaten: **BE CH DE FR GB IT LI NL**

(56) Entgegenhaltungen:
**EP-A-0 017 879**
**EP-A-0 073 727**
**EP-A-0 088 049**
**EP-A-0 102 003**
**DE-A-3 210 869**

(73) Patentinhaber: **CIBA- GEIGY AG, Klybeckstrasse 141, CH- 4002 Basel (CH)**

(72) Erfinder: **Eberle, Dieter, Dr., Girenhaldenweg 10, CH- 4126 Bettingen (CH)**
Erfinder: **Langauer, Theodor,Dr., Obrechtstrasse 4, CH- 4132 Muttenz (CH)**

**EP 0 163 598 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft fliessfähige herbizide Zusammensetzungen in Form von wässrigen Suspensionen, die aus mindestens einer festen dispersen Phase und einer kontinuierlichen wässrigen Phase bestehen und die als aktive Komponente mindestens ein herbizid wirksames Harnstoffderivat enthalten.

Die erfindungsgemässen herbiziden Zusammensetzungen stellen Wirkstoffkonzentrate dar, die für den Transport und die Lagerung von herbiziden Mitteln vorgesehen sind. Diese Wirkstoffkonzentrate werden vor der Anwendung durch Verdünnung mit Wasser auf eine für den jeweiligen Anwendungszweck geeignete Wirkstoffkonzentration gebracht.

Es ist bekannt, herbizid wirksame Harnstoffderivate für sich allein oder in Kombination mit anderen herbiziden Wirkstoffen, z. B. Triazinderivaten, als wässrige Suspensionskonzentrate zu formulieren. So beschreibt die EP-A-0 073 727 wässrige Suspensionskonzentrate von 3-(3,4-Dichlorphenyl)-1-butyl-1-methyl-Harnstoff (Neburon), die zur Verbesserung der physikalischen Stabilität der Suspension 1 - 10 Gew.-% eines weiteren Harnstoffderivats enthalten, das eine dem Neburon sehr ähnliche Struktur besitzt. In der EP-A-0 017 879 sind wässrige Suspensionskonzentrate von 3-(3,4-Dichlorphenyl-1-methoxy-1-methylharnstoff (Linuron) beschrieben, die zur Vermeidung der Kristallisation des Wirkstoffs eine gewisse Menge eines fettlöslichen Disazofarbstoffs enthalten. Aus der DE-A-3 210 869 sind wässrige Suspensionskonzentrate von Bioziden, u.a. von herbizid wirksamen Harnstoffderivaten, beschrieben, die als wirksames Dispergiermittel ein Phosphorsäureestersalz eines nichtionischen Tensids enthalten. In der EP-A-0 088 049 sind wässrige Suspensionskonzentrate beschrieben, die als aktive Komponente eine Mischung eines 2,4-Diamino-6-chlor-s-triazin-Herbizids und eines herbizid wirksamen Chloracetanilids und als Dispergiermittel einen Mono- oder Di-(phenolpolyglykoläther)-phosphorsäureester mit 5 - 41 Äthylenoxid-Einheiten (EO) oder ein Salz davon und einen Polyglykoläther aus der Klasse der äthoxylierten Alkanole, Carbonsäuren oder Phenole mit 3 - 46 EO enthalten. Wässrige Suspensionskonzentrate, die mehr als 500 g/l eines herbiziden Harnstoffderivats enthalten, sind in keiner der vorgenannten Druckschriften beschrieben. Solche Suspensionskonzentrate mit einem Wirkstoffgehalt von mehr als 500 g/l, die vom wirtschaftlichen und anwendungstechnischen Standpunkt aus wünschenswert sind, konnten bisher nicht hergestellt werden.

Der vorliegenden Erfindung liegt daher die Aufgabe zugrunde, fliessfähige herbizide Zusammensetzungen in Form von wässrigen Suspensionen bereitzustellen, die auch bei einem Gehalt an Aktivsubstanz von mehr als 500 g/l transport- und lagerstabil sind.

Erfindungsgemäss wird ein fliessfähiges herbizides Suspensionskonzentrat vorgeschlagen, das dadurch gekennzeichnet ist, dass es

45 - 66 Gew.-% eines oder mehrerer Harnstoffderivate der Formel I

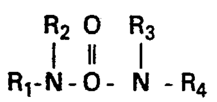

(I)

in welcher $R_1$ Benzthiazol-2-yl, 5-Trifluormethyl-1,3,4-thiadiazol-2-yl oder einen Phenylrest der Formel

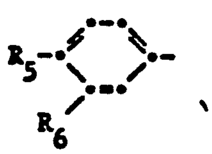

bedeutet, in welcher $R_5$ Wasserstoff, Chlor, Brom, oder $C_1$-$C_4$-Alkyl, $R_6$ Wasserstoff, Chlor, Trifluormethyl oder $C_1$-$C_4$-Alkylaminocarbonyloxy bedeutet, wobei $R_5$ und $R_6$ nicht gleichzeitig für Wasserstoff stehen können, $R_2$ Wasserstoff oder, wenn $R_1$ Benzthiazol-2-yl oder 5-Trifluormethyl-1,3,4-thiadiazol-2-yl bedeutet für Methyl steht, $R_3$ Methyl bedeutet und $R_4$ für Methyl, Methoxy oder, wenn $R_1$ Benzthiazol-2-yl oder 5-Trifluormethyl-1,3,4-thiadiazol-2-yl bedeutet, für Wasserstoff steht, oder einer Mischung eines oder mehrerer Harnstoffderivate der Formel I und einer weiteren, in Wasser schwer löslichen festen herbiziden Wirksubstanz,

2 - 10 Gew.-% mindestens eines Mono- oder Di-(phenolpolyglykoläther)-phosphorsäureesters oder eines Salzes davon der Formel II

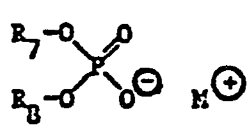

(II)

in welcher $R_7$ einen Rest der Formel

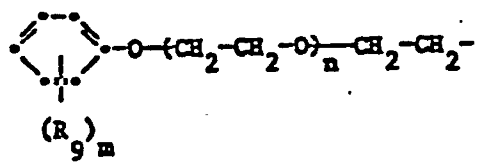

bedeutet, $R_8$ die gleiche Bedeutung hat wie $R_7$ oder für Wasserstoff steht und M ein Proton, ein Natrium-, Kalium-Diäthylammonium-, Triäthylammonium-, Diäthanolammonium- oder Triäthanolammoniumkation bedeutet, wobei $R_9$ für Wasserstoff, $C_3$-$C_{10}$-Alkyl oder Styryl, m für eine ganze Zahl von 1 - 4 und n für eine ganze Zahl von 4 - 40 steht,

0,1 - 5 Gew.-% mindestens eines Polyglykoläthers der Formel III

$$R_{10}\text{-O-(-CH}_2\text{-CH}_2\text{-O-)}_p\text{-H} \quad \text{(III)}$$

worin $R_{10}$ $C_{12}$-$C_{18}$-Alkyl, $C_{12}$-$C_{22}$-Alkanoyl, $C_{12}$-$C_{22}$-Alkenoyl, $C_{12}$-$C_{22}$-Alkadienonyl, $C_{12}$-$C_{22}$-Alkatrienonyl oder durch $C_3$-$C_{10}$-Alkyl, $C_5$-$C_8$-Cycloalkyl oder Styryl 1 - 3 fach substituiertes Phenyl und p eine ganze Zahl von 1 - 6 bedeutet,

0 - 3 Gew.-% eines Hilfsdispergators
0 - 10 Gew.-% eines Antifrostmittels und
20 - 40 Gew.-% Wasser enthält.

Die erfindungsgemässen herbiziden Zusammensetzungen stellen Suspensionskonzentrate dar, die als aktive Komponente 45 - 66 Gew.-% eines oder mehrerer Harnstoffderivate der Formel I oder ein Gemisch eines oder mehrerer Harnstoffderivate der Formel I mit einem weiteren in Wasser schwerlöslichen festen Herbizid enthalten. Vorzugsweise enthalten die erfindungsgemässen Suspensionskonzentrate

45 - 60 Gew.-% eines oder mehrerer Harnstoffderivate der Formel I oder eines Gemisches eines oder mehrerer Harnstoffderivate der Formel I mit einem weiteren in Wasser schwerlöslichen festen Herbizid,

2 - 5 Gew.-% mindestens eines Mono- oder Di-(phenolpolyglykoläther)-phosphorsäureesters oder eines Salzes davon der Formel II,

0,1 - 2 Gew.-% mindestens eines Polyglykoläthers der Formel III
0 - 3 Gew.-% eines Hilfsdispergators
0 - 10 Gew.-% eines Antifrostmittels und
23 - 40 Gew.-% Wasser.

Unter den Harnstoffen der Formel I sind solche bevorzugt, in welchen $R_1$ 3-Chlor-4-methylphenyl, 3-Trifluormethylphenyl, 4-isopropylphenyl, 3,4-Dichlorphenyl, 3-tert.-Butylaminocarbonyloxyphenyl, 4-Brom-3-chlorphenyl oder 4-Bromphenyl, $R_2$ Wasserstoff, $R_3$ Methyl und $R_4$ Methyl oder Methoxy darstellen. Ferner kommen als Harnstoffe der Formel I vorzugsweise solche in Betracht, in welchen $R_1$ Benzthiazol-2-yl oder 5-Trifluormethyl-1,2,4-thiadiazol-2-yl, $R_2$ und $R_3$ Methyl und $R_4$ Wasserstoff bedeutet. Als einzelne besonders bevorzugte Vertreter von Harnstoffen der Formel I sind zu nennen:

N-(3-Chlor-4-methylphenyl)-N',N'-dimethylharnstoff (Chlortoluron)
N-(3-Trifluormethylphenyl)-N',N'-dimethylharnstoff (Fluometuron)
N-(4-Isopropylphenyl)-N',N'-dimethylharnstoff (Isoproturon)
N-(3,4-Dichlorphenyl)-N',N'-dimethylharnstoff (Diuron)
N-(3-tert.-Butylaminocarbonyloxyphenyl)-N',N'-dimethylharnstoff (Karbutylat)
N-(3,4-Dichlorphenyl)-N'-methoxy-N'-methylharnstoff (Linuron)
N-(4-Brom-3-chlorphenyl)-N'-methoxy-N'-methylharnstoff (Chlorbromuron)
N-(4-Bromphenyl)-N'-methoxy-N'-methylharnstoff (Metobromuron)
N-(5-Trifluormethyl-1,2,4-thiadiazol-2-yl)-N,N'-dimethylharnstoff (Thiazafluron)
N-(Benzthiazol-2-yl)-N,N'-dimethylharnstoff (Methabenzthiazuron)

Bevorzugte Harnstoffderivate der Formel I sind Chlortoluron, Metobromuron, Fluometuron und Isoproturon.

Als weitere herbizide Wirksubstanzen, die zusammen mit einem oder mehreren Harnstoffderivaten der Formel I die Aktivkomponente der erfindungsgemässen herbiziden Suspensionskonzentrate bilden können, kommen grundsätzlich beliebige feste, in Wasser schwerlösliche herbizide Wirksubstanzen in Betracht, sofern deren Kombination mit einem Harnstoffderivat der Formel I aus irgend einem Grund, beispielsweise Verbreiterung des Wirkungsspektrums oder Synergismus, wünschenswert ist. Solche weiteren herbiziden Wirksubstanzen, die zusammen mit einem oder mehreren Harnstoffderivaten der Formel I die aktive Komponente der erfindungsgemässen Suspensionskonzentrate bilden können, können beispielsweise aus folgenden Klassen von herbiziden Wirksubstanzen ausgewählt werden:

Diphenylätherderivate,
Phenoxyphenoxyalkancarbonsäurederivate,
Nitroaniline,
Halogenacetanilide,
O-Aryloxime,

Triazine,
Benzamidderivate,
Sulfonylharnstoffe,
halogenierte Pyridyloxyalkancarbonsäuren,
Imidazolinylbenzoesäurederivate,
Imidazolinylnikotinsäurederivate,
N-substituierte Halogenpyrrolidone,
Hydroxybenzonitrile und
Benzthiadiazinonderivate.

Dabei kommen als Diphenylätherderivate insbesondere Verbindungen des in der US-A-3 652 645 beschriebenen Typs, insbesondere 5-(2,4-Dichlorphenoxy)-2-nitrobenzoesäuremethylester (Bifenox), ferner Verbindungen des in der DE-A1-2 831 262 beschriebenen Typs, insbesondere 2-Chlor-6-nitro-3-phenoxyanilin (Aclonifen), sowie Verbindungen des in der US-A-4 322 375 beschriebenen Typs, insbesondere 2-(2-Chlor-4-trifluormethylphenoxy)-5-nitrophenylphosphonsäuredimethylester, und Verbindungen des in der EP-A-69 055 beschriebenen Typs, insbesondere 2-[4-(3-Trifluormethylphenoxy)-phenyl]-3-äthoxycarbonyl-4-oxo-5-äthyl-5,6-dihydropyran, in Betracht. Als Phenoxyphenoxyalkancarbonsäurederivate sind insbesondere Verbindungen des in der DE-A1-2 223 894 beschriebenen Typs, insbesondere α-[4-(2,4-Dichlorphenoxy)-phenoxy]-propionsäuremethylester (Illoxan) geeignet. Als Nitroaniline sind insbesondere Verbindungen des in der US-A-4 199 669 beschriebenen Typs, vorzugsweise N-(1-Äthylpropyl)-2,6-dinitro-3,4-xylidin (Pendimethalin) zu nennen. Als Halogenacetanilide kommen bevorzugt Verbindungen des in der DE-A1-2 305 495 beschriebenen Typs, insbesondere N-(1-Methyl-2-methoxyäthyl)-N-chloracetyl-2,6-dimethylanilin, in Betracht. Als O-Aryloxime sind die Verbindungen des in der US-A-3 733 359 beschriebenen Typs, insbesondere 3,5-Dibrom-4-hydroxybenzaldehyd-O-2,4-dinitrophenyloxim (Bromfenoxim), bevorzugt. Als Triazine können vorzugsweise Verbindungen des in der GB-A-814 948 beschriebenen Typs, insbesondere 2-Äthylamino-4-tert.-butylamino-6-methylthio-1,3,5-triazin (Terbutryn), 2,4-bis-Isopropylamino-6-methylthio-1,3,5-triazin (Prometryn) und 2,4-bis-Isopropylamino-6-äthylthio-1,3,5-triazin (Dipropetryn) verwendet werden. Geeignete Benzamidderivate sind Verbindungen des in der EP-A-49 071 beschriebenen Typs, insbesondere N-[3-(1-Äthyl-1-methylpropyl)-5-isoxazolyl]-2,6-dimethoxybenzamid (Benzamizol). Als geeignete Sulfonylharnstoffe sind die Verbindungen des in der EP-A-44 808 beschriebenen Typs, insbesondere N-[2-(2-Chloräthoxy)-phenylsulfonyl]-N'-(4-methoxy-6-methyl-1,3,5-triazin-2-yl)-harnstoff, ferner die Verbindungen des in der US-A-4 127 405 beschriebenen Typs, insbesondere N-(2-Chlorphenylsulfonyl)-N'-(4-methoxy-6-methyl-1,3,5-triazin-2-yl)-harnstoff (Chlorsulfuron) und die Verbindungen des in der US-A-4 383 113 beschriebenen Typs, insbesondere N-(2-Methoxycarbonylphenylsulfonyl)-N'-(4-methoxy-6-methyl-1,3,5-triazin-2-yl)-harnstoff (Metsulfuron), zu nennen. Als halogenierte Pyridyloxyalkancarbonsäurederivate sind die Verbindungen des in US-A-4 110 104 beschriebenen Typs, insbesondere 2-(4-Amino-3,5-dichlor-6-fluorpyrid-2-yloxy)-essigsäure (DOWCO 433) geeignet. Als Imidazolinylbenzoesäurederivate kommen insbesondere die Verbindungen des in der US-A-4 188 487 beschriebenen Typs, insbesondere 2-(4-Isopropyl-4-methyl-5-oxo-2-imidazolin-2-yl)-4-methylbenzoesäuremethylester und 2-(4-Isopropyl-4-methyl-5-oxo-2-imidazolin-2-yl)-5-methylbenzoesäuremethylester oder ein Gemisch dieser beiden Verbindungen, in Betracht. Als Imidazolinylnikotinsäurederivate können vor allem die in der EP-A-41 623 beschriebenen Verbindungen, insbesondere 2-(4-Isopropyl-4-methyl-5-oxo-2-imidazolin-2-yl)-nikotinsäure, verwendet werden. Als N-substituierte Halogenpyrrolidone sind die in der DE-A1-2 612 731 beschriebenen Verbindungen, insbesondere 1-(3-Trifluormethylphenyl)-2-chlor-4-chlormethyl-2-pyrrolidon geeignet. Als Hydroxybenzonitrile kommen vorzugsweise die in der US-A-3 397 054 beschriebenen Verbindungen, insbesondere 3,5-Dibrom-4-hydroxybenzonitril (Bromoxynil) und 3,5-Dijod-4-hydroxybenzonitril (Ioxynil) in Betracht. Als Benzthiadiazinonderivate können vorzugsweise Verbindungen des in der DE-A1-1 542 836 beschriebenen Typs, insbesondere 3-Isopropyl-(1H)-benzo-2,1,3-thiadiazin-2-on-2,2-dioxid (Bentazon), verwendet werden.

Bevorzugte herbizide Wirksubstanzen, die zusammen mit einem oder mehreren Harnstoffderivaten der Formel I die aktive Komponente der erfindungsgemässen Suspensionskonzentrate bilden können, sind
5-(2,4-Dichlorphenoxy)-2-nitrobenzoesäuremethylester
N-(1-Methyl-2-methoxyäthyl)-N-chloracetyl-2,6-dimethylanilin
2-Äthylamino-4-tert.-butylamino-6-methoxylthio-1,3,5-triazin
2,4-bis-Isopropylamino-6-methylthio-1,3,5-triazin
2,4-bis-Isopropylamino-6-äthylthio-1,3,5-triazin
N-[2-(2-Chloräthoxy)-phenylsulfonyl]-N'-(4-methoxy-6-methyl-1,3,5-triazin-2-yl)-harnstoff
N-(2-Chlorphenylsulfonyl)-N'-(4-methoxy-6-methyl-1,3,5-triazin-2-yl)-harnstoff
N-(2-Methoxycarbonylphenylsulfonyl)-N'-(4-methoxy-6-methyl-1,3,5-triazin-2-yl)-harnstoff.

Die erfindungsgemässen herbiziden Zusammensetzungen können einen oder mehrere Mono- oder Di-(phenolpolyglykoläther)-phosphorsäureester oder Salze davon der Formel II enthalten.

Die Mono- und Di-(phenolpolyglykoläther)-phosphorsäureester der Formel II werden vorzugsweise als Salz, insbesondere als Triäthanolammoniumsalz eingesetzt, wobei die reinen Mono- oder Disalze oder Gemische von Mono- und Disalzen verwendet werden können. Der an die Phenylgruppe des Restes $R_7$ gebundene Rest $R_9$ bedeutet als $C_3$-$C_{10}$-Alkylrest in erster Linie geradkettige Alkylreste, wie n-Propyl, n-Butyl, n-Pentyl, n-Hexyl, n-Heptyl, n-Octyl, n-Nonyl oder n-Decyl, umfasst jedoch auch die verzweigten Isomeren dieser Reste, wie tert.-

Butyl, Dimethylpentyl, Dimethylhexyl, Dimethyloctyl und Diäthylpropyl. Bevorzugte Bedeutungen des Restes $R_9$ sind n-Nonyl und Styryl. Die bevorzugte Bedeutung für m ist 1 - 3 und die bevorzugte Bedeutung für n ist 6 - 26.

Als Beispiele für substituierte Phenylgruppen, die im Rest $R_7$ vorliegen können, seien 4-n-Nonylphenyl, 2,4,6-Tri-n-butylphenyl, 2,4,6-Tristyrylphenyl, 2,4-Di-n-nonylphenyl, 2,4,6-Tri-n-pentylphenyl, 2,4-Distyrylphenyl, 4-Styrylphenyl, 2,3,4,6-Tetrastyrylphenyl, 4-n-Decylphenyl, 4-n-Heptylphenyl, 4-n-Pentylphenyl-2,4-Di-n-hexylphenyl, 2,4-Di-n-octylphenyl, 4-n-Octylphenyl, 4-n-Hexylphenyl, 2,4-Di-n-pentylphenyl und 2,4,6-Tri-n-pentylphenyl genannt. Bevorzugte Phenylgruppen, die für $R_7$ bzw. $R_7$ und $R_8$ stehen können, sind 4-n-Nonylphenyl und trisubstituierte Phenylgruppen, insbesondere 2,4,6-Tristyrylphenyl. In den Mono- und Di-(phenolpolyglykoläther)-phosphorsäureestern oder Salzen davon der Formel II bedeutet n, falls $R_7$ bzw. $R_7$ und $R_8$ für 4-n-Nonylphenyl stehen, vorzugsweise 6 - 9 und, falls $R_7$ bzw. $R_7$ und $R_8$ 2,4,6-Triphenylstyryl darstellen, vorzugsweise 16 - 26.

Als typische Vertreter von erfindungsgemäss verwendbaren Mono- und Di-(phenolpolyglykoläther)-phosphorsäureestern der Formel II seien Mono- und Di-(tristyrylphenolhexadecaglykoläther)-phosphorsäureester, Mono- und Di-(tristyrylphenoloctadecaglykoläther)-phosphorsäureester, Mono- und Di-(tristyrylphenolnonadecaglykoläther)-phosphorsäureester, Mono- und Di-(tristyrylphenoleicosaglykoläther)-phosphorsäurester, Mono- und Di-(tristyrylphenoldocosaglykoläther)-phosphorsäureester, Mono- und Di-(nonylphenolhexaglykoläther)-phosphorsäureester Mono- und Di-(nonylphenoloctaglykoläther)-phosphorsäureester und Mono- und Di-(nonylphenolnonaglykoläther)-phosphorsäureester genannt. Die im Handel erhältlichen Phenolpolyglykolätherphosphorsäureester der Formel II liegen in der Regel als Gemische der entsprechenden Mono- und Diestern bzw. als Salze von Gemischen aus Mono- und Diester vor. Auch in bezug auf die Substitution im Phenylrest sind die im Handel erhältlichen Produkte Gemische mit verschiedenem Substitutionsgrad (m = 1 - 4). Derartige Gemische können vorteilhaft für die Herstellung von der erfindungsgemässen herbiziden Zusammensetzungen verwendet werden.

Geeignete, im Handel erhältliche Mono- und Di-(phenolpolyglykoläther)-phosphorsäureesterderivate der Formel II sind beispielsweise

| | |
|---|---|
| HOE S 3475 | Triäthanolaminsalz eines Gemisches von Mono- und Di-(2,4,6-tristyrylphenolpolyglykoläther)-esterphosphat, wobei der Polyglykolätherteil durchschnittlich aus 20 Äthylenglykoleinheiten ($\bar{n}$ = 20) besteht; |
| Soprophor® F1 | Triäthanolaminsalz eines Gemisches von Mono- und Di-(2,4,6-tristyrylphenolpolyglykoläther)-esterphosphat, in dem der Polyglykolätherteil 16 - 20 Äthylenglykoleinheiten (n = 16 - 20) enthält; |
| Soitem 8 FL/N | Triäthanolaminsalz eines Gemisches von Mono- und Di-(2,4,6-tristyrylphenolpolyglykoläther)-esterphosphat, in dem der Polyglykolätherteil durchschnittlich 18 Äthylenglykoleinheiten ($\bar{n}$ = 18) enthält; |
| Celanol PS-17 | Kaliumsalz eines Gemisches von Mono- und Di-(nonylphenolpolyglykoläther)-esterphosphat mit durchschnittlich 6 Äthylenglykoleinheiten ($\bar{n}$ = 6); |
| Celanol PS-19 | Kaliumsalz eines Gemisches von Mono- und Di-(nonylphenolpolyglykoläther)-esterphosphat mit durchschnittlich 9 Äthylenglykoleinheiten ($\bar{n}$ = 9); |

Die Polyglykoläther der Formel III enthalten vorzugsweise 1 - 3 Glykoläthereinheiten (p = 1 - 3).

Der Rest $R_{10}$ umfasst als $C_{12}$-$C_{18}$-Alkylgruppe in erster Linie geradkettige Alkylreste, wie n-Dodecyl, n-Tridecyl, n-Tetradecyl, n-Pentadecyl, n-Hexadecyl, n-Heptadecyl und n-Octadecyl, aber auch deren Isomeren mit verzweigten Ketten wie Trimethylnonyl, Tetramethylnonyl, Dimethylundecyl und Dipropylhexyl. Als Cycloalkylrest mit 5 - 8 Kohlenstoffatomen umfasst $R_{10}$ Cyclopentyl, Cyclohexyl, Cycloheptyl und Cyclooctyl.

Unter Alkanoyl, Alkenoyl, Alkadienoyl und Alkatrienoylresten mit 12 - 22 Kohlenstoffatomen sind die Acylreste der entsprechenden 1-, 2- oder 3-fach ungesättigten Carbonsäuren zu verstehen. Als gesättigte Carbonsäuren von denen sich die Alkanoylreste ableiten seien Laurinsäure, Myristinsäure, Palmitinsäure oder Stearinsäure, genannt. Ungesättigte Carbonsäuren, von denen sich die unter die Bedeutung von $R_{10}$ fallenden Alkenylreste ableiten sind Lauroleinsäure, Myristoleinsäure, Palmitoleinsäure, Petroselinsäure, Ölsäure, Elaidinsäure, Vaccensäure, Ricinolsäure und Erucasäure. Als Beispiele für 2- oder 3-fach ungesättigte Carbonsäuren, von denen sich die unter die Bedeutung von $R_{10}$ fallenden Alkadienoyl und Alkatrienoylreste ableiten seien Linolsäure, Linolensäure, Ricinensäure und α-Eleastearinsäure genannt.

Als 1- bis 3-fach substituierter Phenylrest bedeutet $R_{10}$ beispielsweise 4-n-Nonylphenyl, 2,4,6-Tri-n-butylphenyl, 2,4,6-Tristyrylphenyl, 2,4-Di-n-nonylphenyl, 2,4,6-Tri-n-pentylphenyl, 2,4-Distyrylphenyl, 4-Styrylphenyl, 4-n-Decylphenyl, 4-n-Heptylphenyl, 4-n-Pentylphenyl, 2,4-Di-n-Hexylphenyl, 2,4-Di-n-Octylphenyl, 4-n-Octylphenyl, 4-n-Hexylphenyl, 2,4-Di-n-pentylphenyl, 2,4,6-Tri-n-pentylphenyl, 4-Cyclohexylphenyl, 4-Cyclopentylphenyl und 2,4-Dicyclohexylphenyl.

Im Handel erhältliche Polyglykoläther der Formel III sind beispielsweise

| | |
|---|---|
| Arkopal® N 030 | 4-Nonylphenolpolyglykoläther mit durchschnittlich 3-Äthylenglykoleinheiten ($\bar{p}$ = 3); |
| Arkopal® N 040 | 4-Nonylphenolpolyglykoläther mit durchschnittlich 4-Äthylenglykoleinheiten ($\bar{p}$ = 4); |
| Disponil NP 3 | 4-Nonylphenolpolyglykoläther mit durchschnittlich 3-Äthylenglykoleinheiten ($\bar{p}$ = 3); |
| Antarox CO 210 | 4-Nonylphenolpolyglykoläther mit 1 - 2 Äthylenglykoleinheiten (p = 1 - 2); |

Brij® 92 Oleylpolyglykoläther mit durchschnittlich 2 Äthylenglykoleinheiten ($\bar{p}$ = 2);
Genapol® 0-020 Oleylpolyglykoläther mit durchschnittlich 2 Äthylenglykoleinheiten ($\bar{p}$ = 2).

Als Hilfsdispergatoren, die in den erfindungsgemässen herbiziden Zusammensetzungen enthalten sein können, kommen sowohl Substanzen, die den Viskositätsgrad günstig beeinflussen, als auch Substanzen, die die Suspension zusätzlich stabilisieren, in Betracht. So können als Hilfsdispergatoren in Wasser lösliche oder in Wasser quellfähige Verdickungsmittel oder synthetische oder halbsynthetische Makromoleküle zugesetzt werden. Geeignete Hilfsdispergatoren, die den erfindungsgemässen herbiziden Zusammensetzungen zugesetzt werden können sind Polysaccharide, insbesondere Polysaccharide vom Xantham-, Alginat-, Guar- oder Cellulose-Typ, oder synthetische Makromoleküle, wie Polyäthylenglykole, Polyvinylpyrrolidone, Polyvinylalkohole, Polyacrylate insbesondere mit Triäthanolamin oder mit Alkali neutralisierte Mischpolymere von Acrylsäure und Acrylsäureestern, oder quellfähige, strukturbildende Silikate, wie pyrogene oder gefällte Kieselsäuren, Bentonite, Montmorillonite, Hectonite, Attapulgite oder organische Derivate von Aluminiumsilikaten.

Als Antifrostmittel, die den erfindungsgemässen herbiziden Zusammensetzungen zur Erhaltung der Fliessfähigkeit bei tiefen Temperaturen und zur Verhinderung des Ausfrierens von Wasser zugesetzt werden können sind übrige Zusätze, wie Äthylenglykol, Propylenglykol, Glycerin, Di-, Tri- und Tetraäthylenglykol und Harnstoff geeignet.

Die erfindungsgemässen herbiziden Zusammensetzungen können ausser den vorgenannten Bestandteilen noch übliche Zusätze wie Antischaummittel, wie z. B. Silikonöl, und Konservierungsmittel, wie z. B. Formaldehyd, enthalten.

Die erfindungsgemässen herbiziden Zusammensetzungen sind fliessfähig und zeichnen sich durch gute Transport- und Lagerstabilität aus. Durch die erfindungsgemässe Kombination von speziellen anionischen und nichtionischen Tensiden wird es möglich, herbizide Suspensionskonzentrate herzustellen, die pro Volumeneinheit wesentlich mehr Aktivsubstanz enthalten können als bisher bekannte Suspensionskonzentrate.

Die erfindungsgemässen herbiziden Zusammensetzungen können wie folgt hergestellt werden:

In einem Rührkessel wird die verfügbare Wassermenge vorgelegt und die Tenside der Formeln II und III und gegebenenfalls ein Hilfsdispergator des vorgenannten Typs von synthetischen Polymeren, ein Frostschutzmittel und ein Antischaummittel bis zur Homogenität der Mischung eingerührt. Dann wird der herbizide Wirkstoff bzw. das Gemisch von herbiziden Wirkstoffen zugesetzt und zunächst 10 - 30 Minuten homogenisiert und anschliessend feingemahlen. Zum Feinmahlen kann beispielsweise eine Glasperlenmühle verwendet werden.

Dem so erhaltenen Suspensionskonzentrat kann zur Beeinflussung der Viskosität noch ein weiterer Hilfsdispergator vom Polysaccharid-Typ (Verdicker) und gewünschtenfalls ein Konservierungsmittel zugesetzt werden. Hierzu geht man zweckmässig so vor, dass man das Polysaccharid in einem separaten Rührkessel in die zur Herstellung eines 2,5 %-igen Gels notwendigen Menge Wasser einrührt und mit der vorgesehenen Menge Konservierungsmittel, z. B. 37 %-ige wässrige Formaldehyd-Lösung, versetzt. Die Mischung wird 10 Minuten gerührt und danach mindestens 2 Stunden quellen gelassen. Die so erhaltene Mischung kann dem feingemahlenen Suspensionskonzentrat, das wie oben beschrieben hergestellt wurde, in der jeweils erforderlichen Menge zugesetzt werden, wobei die dadurch eingebrachte Wassermenge bei der Berechnung der insgesamt verfügbaren Wassermenge zu berücksichtigen ist.

Die so erhaltenen fliessfähigen herbiziden Zusammensetzungen besitzen je nach Art und Konzentration der verwendeten Wirkstoffe folgende Qualitätsmerkmale:

Viskosität (20° C): 600 - 1200 mPa.s (gemessen in einem Brookfield LV Viskosimeter, Messystem III)
PH-Wert: 6,5 - 8,5
Dichte (20° C): 1,08 - 1,3.

In den nachfolgenden Beispielen werden zur Erläuterung der vorliegenden Erfindung einige typische herbizide Zusammensetzungen angegeben. Die Herstellung dieser herbiziden Zusammensetzungen kann nach der oben angegebenen Methode erfolgen.

**Beispiel 1: Suspensionskonzentrat von Chlortoluron**

| | |
|---|---|
| 58,9 Gew.-% | Chlortoluron techn. (99 %-ig) |
| 3,1 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,75 Gew.-% | Nonylphenoltriglykoläther |
| 6,25 Gew.-% | Äthylenglykol |
| 0,40 Gew.-% | Silikonöl |
| 0,12 Gew.-% | Polysaccharid vom Xantham-Typ |
| 0,40 Gew.-% | Polyacrylsäure |

| | |
|---|---|
| 0,12 Gew.-% | Formaldehyd |
| 29,96 Gew.-% | Wasser |

Gehalt an Wirksubstanz pro Liter: 700 g
Dichte (20°C): 1,19 - 1,21 g/cm$^3$

**Beispiel 2: Suspensionskonzentrat von Chlortoluron**

| | |
|---|---|
| 66,15 Gew.-% | Chlortoluron techn. (99 %-ig) |
| 3,10 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,80 Gew.-% | Nonylphenoltriglykoläther |
| 6,25 Gew.-% | Äthylenglykol |
| 0,40 Gew.-% | Silikonöl |
| 0,04 Gew.-% | Polysaccharid vom Xantham-Typ |
| 0,04 Gew.-% | Formaldehyd |
| 23,22 Gew.-% | Wasser |

Gehalt an Wirksubstanz pro Liter: 800 g
Dichte (20°C): 1,21 - 1,23 g/cm$^3$

**Beispiel 3: Suspensionskonzentrat von Chlortoluron und Benzamizol**

| | |
|---|---|
| 57,7 Gew.-% | Chlortoluron techn. (99 %-ig) |
| 2,4 Gew.-% | Benzamizol techn. (91,7 %-ig) |
| 3,0 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,8 Gew.-% | Nonylphenoltriglykoläther |
| 6,0 Gew.-% | Äthylenglykol |
| 0,5 Gew.-% | Silikonöl |
| 0,12 Gew.-% | Polysaccharid vom Xantham-Typ |
| 0,12 Gew.-% | Formaldehyd |
| 29,36 Gew.-% | Wasser |

Gehalt an Wirksubstanz pro Liter: 700 g
Dichte (20°C): 1,18 - 1,20 g/cm$^3$

**Beispiel 4: Suspensionskonzentrat von Chlortoluron und Bifenox**

| | |
|---|---|
| 43,5 Gew.-% | Chlortoluron techn. (99 %-ig) |
| 17,3 Gew.-% | Bifenox techn. (99,8 %-ig) |
| 3,1 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,8 Gew.-% | Nonylphenoltriglykoläther |
| 5,0 Gew.-% | Äthylenglykol |
| 0,5 Gew.-% | Silikonöl |
| 0,4 Gew.-% | Polyacrylsäure |
| 0,15 Gew.-% | Polysaccharid vom Xantham-Typ |
| 0,15 Gew.-% | Formaldehyd |
| 29,1 Gew.-% | Wasser |

Gehalt an Wirksubstanz pro Liter: 700 g
Dichte (20°C): 1,15 - 1,17 g/cm$^3$

**Beispiel 5: Suspensionskonzentrat von Chlortoluron und Terbutryn**

| | |
|---|---|
| 18,4 Gew.-% | Chlortoluron techn. (99 %-ig) |
| 36,5 Gew.-% | Terbutryn techn. (99,6 %-ig) |
| 2,5 Gew.-% | Kaliumsalz eines Gemisches von Mono- und Di-(nonyl- phenolpolyglykoläther)-esterphosphat mit 6 - 9 Äthylenglykoleinheiten |
| 1,1 Gew-% | Gemisch von Nonylphenolmono- und -diglykoläther |
| 2,7 Gew.-% | Äthylenglykol |
| 0,5 Gew.-% | Silikonöl |
| 0,12 Gew.-% | Polysaccharid vom Xanthem-Typ |
| 0,12 Gew.-% | Formaldehyd |
| 38,06 Gew.-% | Wasser |

Gehalt an Wirksubstanz pro Liter: 600 g
Dichte (20° C): 1,08 - 1,10 g/cm$^3$

**Beispiel 6: Suspensionskonzentrat von Chlortoluron und Dipropetryn**

| | |
|---|---|
| 32,5 Gew.-% | Chlortoluron techn. (99 %-ig) |
| 21,8 Gew.-% | Dipropetryn techn. (98 %-ig) |
| 2,8 Gew.-% | Kaliumsalz eines Gemisches von Mono- und Di-(nonyl- phenolpolyglykoläther)-esterphosphat mit 6 - 9 Äthylenglykoleinheiten |
| 0,7 Gew.-% | Gemisch von Nonylphenolmono- und -diglykoläther |
| 5,6 Gew.-% | Äthylenglykol |
| 0,4 Gew.-% | Silikonöl |
| 0,12 Gew.-% | Polysaccharid vom Xantham-Typ |
| 0,12 Gew.-% | Formaldehyd |
| 35,96 Gew.-% | Wasser |

Gehalt an Wirksubstanz pro Liter: 600 g
Dichte (20° C): 1,11 - 1,13 g/cm$^3$

**Beispiel 7: Suspensionskonzentrat von Chlortoluron und N-[2-(2-Chloräthoxy)-phenylsulfonyl)-N'-(4-methoxy-6-methyl-1,3,5-triazin-2-yl)-harnstoff**

| | |
|---|---|
| 58,35 Gew.-% | Chlortoluron techn. (99 %-ig) |
| 6,1 Gew.-% | N-[2-(2-Chloräthoxy)-phenylsulfonyl]-N'-(4-methoxy- 6-methyl-1,3,5-triazin-2-yl)-harnstoff techn. (96 %-ig) |
| 3,1 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,75 Gew.-% | Nonylphenoltriglykoläther |
| 6,25 Gew.-% | Äthylenglykol |
| 0,4 Gew.-% | Silikonöl |
| 0,4 Gew.-% | Gemisch aus Polyacrylsäure und Polyacrylsäureester |
| 0,12 Gew.-% | Polysaccharid vom Xantham-Typ |
| 0,12 Gew.-% | Formaldehyd |
| 24,41 Gew.-% | Wasser |

Gehalt an Wirksubstanz pro Liter: 700 g
Dichte (20° C): 1,19 - 1,21 g/cm$^3$

**Beispiel 8: Suspensionskonzentrat von Fluometuron**

| | |
|---|---|
| 59,9 Gew.-% | Fluometuron techn. (97,3 %-ig) |
| 3,1 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,8 Gew.-% | Nonylphenoltriglykoläther |
| 5,0 Gew.-% | Äthylenglykol |
| 0,5 Gew.-% | Silikonöl |
| 0,4 Gew.-% | mit Triäthanolamin neutralisiertes Gemisch aus Polyacrylsäure und Polyacrylsäureester |

| | |
|---|---|
| 0,15 Gew.-% | Polysaccharid vom Xantham-Typ |
| 0,15 Gew.-% | Formaldehyd |
| 30,0 Gew.-% | Wasser |

Gehalt an Wirksubstanz pro Liter: 700 g
Dichte (20° C): 1,19 - 1,21 g/cm³

**Beispiel 9: Suspensionskonzentrat von Fluometuron und N-(1-Methyl-2-methoxyäthyl)-N-chloracetyl-2,6-dimethylanilin**

| | |
|---|---|
| 42,55 Gew.-% | Fluometuron techn. (97,3 %-ig) |
| 10,55 Gew.-% | H-(1-Methyl-2-methoxyäthyl)-N-chloracetyl- 2,6-dimethylanilin (98,1 %-ig) |
| 3,1 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,8 Gew.-% | Oleylpolyglykoläther mit 2 - 4 Äthylenglykoleinheiten |
| 5,0 Gew.-% | Äthylenglykol |
| 0,5 Gew.-% | Silikonöl |
| 0,1 Gew.-% | mit Triäthanolamin neutralisiertes Gemisch aus Polyacrylsäure und Polyacrylsäureester |
| 0,1 Gew.-% | Formaldehyd |
| 37,3 Gew.-% | Wasser |

Gehalt an Wirksubstanz pro Liter: 600 g
Dichte (20° C); 1,15 - 1,17 g/cm³

**Beispiel 10: Suspensionskonzentrat von Metobromuron**

| | |
|---|---|
| 53,0 Gew.-% | Metobromuron techn. (98,65 %-ig) |
| 3,5 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,5 Gew.-% | Nonylphenoltriglykoläther |
| 9,0 Gew.-% | Äthylenglykol |
| 0,3 Gew.-% | Silikonöl |
| 0,15 Gew.-% | Polysaccharid vom Xantham-Typ |
| 0,15 Gew.-% | Formaldehyd |
| 33,4 Gew.-% | Wasser |

Gehalt an Wirksubstanz pro Liter: 670 g
Dichte (20° C: 1,28 - 1,30 g/cm³

**Beispiel 11: Suspensionskonzentrat von Isoproturon**

| | |
|---|---|
| 54,8 Gew.-% | Isoproturon techn. (99 %-ig) |
| 2,4 Gew.-% | Triäthanolaminsalz eines Gemisches von Mono- und Di-(2,4,6-tristyrylphenol-polyglykoläther)-esterphosphat mit 16 - 20 Äthylenglykoleinheiten |
| 0,6 Gew.-% | Oleyldiglykoläther |
| 4,0 Gew.-% | Äthylenglykol |
| 0,5 Gew.-% | Silikonöl |
| 0,1 Gew.-% | Polysaccharid vom Xantham-Typ |
| 0,1 Gew.-% | Formaldehyd |
| 37,5 Gew.-% | Wasser |

Gehalt an Wirksubstanz pro Liter: 600 g
Dichte (20° C): 1,08 - 1,10 g/cm³.

**Patentansprüche**

1. Fliessfähige herbizide Zusammensetzung in Form einer wässrigen Suspension, die aus mindestens einer festen dispersen Phase und einer kontinuierlichen wässrigen Phase besteht und die als aktive Komponente mindestens ein herbizid wirksames Harnstoffderivat enthält, gekennzeichnet durch einen Gehalt an
45 - 66 Gew.-% eines oder mehrerer Harnstoffderivate der Formel I

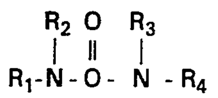

(I)

in welcher $R_1$ Benzthiazol-2-yl, 5-Trifluormethyl-1,3,4-thiadiazol-2-yl oder einen Phenylrest der Formel

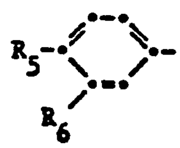

bedeutet, in welcher $R_5$ Wasserstoff, Chlor, Brom, oder $C_1$-$C_4$-Alkyl, $R_6$ Wasserstoff, Chlor, Trifluormethyl oder $C_1$-$C_4$-Alkylaminocarbonyloxy bedeutet, wobei $R_5$ und $R_6$ nicht gleichzeitig für Wasserstoff stehen können, $R_2$ Wasserstoff oder, wenn $R_1$ Benzthiazol-2-yl oder 5-Trifluormethyl-1,3,4-thiadiazol-2-yl bedeutet für Methyl steht, $R_3$ Methyl bedeutet und $R_4$ für Methyl, Methoxy oder, wenn $R_1$ Benzthiazol-2-yl oder 5-Trifluormethyl-1,3,4-thiadiazol-2-yl bedeutet, für Wasserstoff steht, oder einer Mischung eines oder mehrerer Harnstoffderivate der Formel I und einer weiteren, in Wasser schwer löslichen festen herbiziden Wirksubstanz,
2 - 10 Gew.-% mindestens eines Mono- oder Di-(phenolpolyglykoläther)-phosphorsäureesters oder eines Salzes davon der Formel II

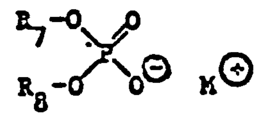

(II)

in welcher $R_7$ einen Rest der Formel

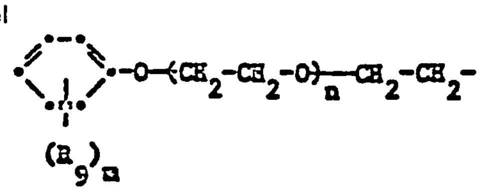

bedeutet, $R_8$ die gleiche Bedeutung hat wie $R_7$ oder für Wasserstoff steht und M ein Proton, ein Natrium-, Kalium-Diäthylammonium-, Triäthylammonium-, Diäthanolammonium- oder Triäthanolammoniumkation bedeutet, wobei $R_9$ für Wasserstoff, $C_3$-$C_{10}$-Alkyl oder Styryl, m für eine ganze Zahl von 1 - 4 und n für eine ganze Zahl von 4 - 40 steht,
0,1 - 5 Gew.-% mindestens eines Polyglykoläthers der Formel III

$$R_{10}\text{-O-(-CH}_2\text{-CH}_2\text{-O-)}_p\text{-H} \qquad \text{(III)}$$

worin $R_{10}$ $C_{12}$-$C_{18}$-Alkyl, $C_{12}$-$C_{22}$-Alkanoyl, $C_{12}$-$C_{22}$-Alkenoyl, $C_{12}$-$C_{22}$-Alkadienonyl, $C_{12}$-$C_{22}$-Alkatrienonyl oder durch $C_3$-$C_{10}$-Alkyl, $C_5$-$C_8$-Cycloalkyl oder Styryl 1 - 3 fach substituiertes Phenyl und p eine ganze Zahl von 1 - 6 bedeutet,
0 - 3 Gew.-% eines Hilfsdispergators
0 - 10 Gew.-% eines Antifrostmittels und
20 - 40 Gew.-% Wasser enthält.

2. Fliessfähige herbizide Zusammensetzung nach Anspruch 1, gekennzeichnet durch einen Gehalt an
45 - 60 Gew.-% eines oder mehrerer Harnstoffderivate der Formel I oder eines Gemisches eines oder mehrerer Harnstoffderivate der Formel I mit einem weiteren in Wasser schwerlöslichen festen Herbizid,
2 - 5 Gew.-% mindestens eines Mono- oder Di-(phenolpolyglykoläther)-phosphorsäureesters oder eines Salzes davon der Formel II,
0,1 - 2 Gew.-% mindestens eines Polyglykoläthers der Formel III
0 - 3 Gew.-% eines Hilfsdispergators
0 - 10 Gew.-% eines Antifrostmittels und
23 - 40 Gew.-% Wasser.

3. Fliessfähige herbizide Zusammensetzung nach Ansprüchen 1 und 2, dadurch gekennzeichnet, dass sie einen Harnstoff der Formel I enthält, in welcher $R_1$ für 3-Chlor-4-methylphenyl, 3-Trifluormethylphenyl, 4-Isopropylphenyl, 3,4-Dichlorphenyl, 3-tert.-Butylaminocarbonyloxyphenyl, 4-Brom-3-fluorphenyl oder 4-Bromphenyl, $R_2$ Wasserstoff, $R_3$ Methyl und $R_4$ Methyl oder Methoxy steht.

4. Fliessfähige herbizide Zusammensetzung nach Ansprüchen 1 und 2, dadurch gekennzeichnet, dass es einen Harnstoff der Formel I enthält, in welcher $R_1$ Benzthiazol-2-yl oder 5-Trifluormethyl-1,2,4-thiadiazol-2-yl, $R_2$ und $R_3$ Methyl und $R_4$ Wasserstoff bedeutet.

5. Fliessfähige herbizide Zusammensetzung nach Ansprüchen 1 und 2, dadurch gekennzeichnet, dass sie als herbizid wirksames Harnstoffderivat der Formel I Chlortoluron, Fluometuron, Isoproturon, Diuron, Karbutylat, Linuron, Chlorbromuron, Metobromuron, Thiazafluron oder Methabenzthiazuron enthält.

6. Fliessfähige herbizide Zusammensetzung nach Ansprüchen 1 und 2, dadurch gekennzeichnet, dass sie als Harnstoffderivat der Formel I Chlortoluron, Metobromuron, Fluometuron oder Isoproturon enthält.

7. Fliessfähige herbizide Zusammensetzung nach Anspruch 1, dadurch gekennzeichnet, dass es neben einem Harnstoffderivat der Formel I eine weitere feste, in Wasser schwerlösliche herbizide Wirksubstanz aus der Klasse der Diphenylätherderivate, Phenoxyphenoxyalkancarbonsäurederivate, Nitroaniline, Halogenacetanilide, O-Aryloxime, Triazine, Benzamidderivate, Sulfonylharnstoffe, halogenierte Pyridyloxyalkancarbonsäure, Imidazolinylbenzoesäurederivate, Imidazolinylnikotinsäurederivate, N-substituierte Halogenpyrrolidinone, Hydroxybenzonitrile und Benzthiadiazinonderivate enthält.

8. Fliessfähige herbizide Zusammensetzung nach Ansprüchen 1 und 7, dadurch gekennzeichnet, dass sie neben einem herbizid wirksamen Harnstoffderivat der Formel I eine weitere feste, in Wasser schwerlösliche herbizide Wirksubstanz aus der Gruppe 5-(2,4-Dichlorphenoxy)-2-nitrobenzoesäuremethylester, 2-Chlor-6-nitro-3-phenoxyanilin, 2-(2-Chlor-4-trifluormethylphenoxy)-5-nitrophenylphosphonsäuredimethylester, 2-[4-(3-Trifluormethylphenoxy)-phenyl]-3-äthoxycarbonyl-4-oxo-5-äthyl-5,6-dihydropyran, α-[4-(2,4-Dichlorphenoxy)-phenoxy]-propionsäuremethylester, N-(1-Äthylpropyl)-2,6-dinitro-3,4-xylidin, N-(1-Methyl-2-methoxyäthyl)-N-chloracetyl-2,6-dimethylanilin, 3,5-Dibrom-4-hydroxybenzaldehyd-O-2,4-dintrophenyloxim, 2-Äthylamino-4-tert.-butylamino-6-methylthio-1,3,5-triazin, 2,4-bis-Isopropylamino-6-methylthio-1,3,5-triazin, 2,4-bis-Isopropylamino-6-äthylthio-1,3,5-triazin, N-[3-(1-Äthyl-l-methylpropyl)-5-isoxazolyl]-2,6-dimethoxybenzamid, N-[2-(2-Chloräthoxy)-phenylsulfonyl]-N'-(4-methoxy-6-methyl-1,3,5-triazin-2-yl)-harnstoff, N-(2-Chlorphenylsulfonyl)-N'-(4-methoxy-6-methyl-1,3,5-triazin-2-yl)-harnstoff, N-(2-Methoxycarbonylphenylsulfonyl)-N'-(4-methoxy-6-methyl-1,3,5-triazin-2-yl)-harnstoff, 2-(4-Amino-3,5-dichlor-6-fluorpyrid-2-yloxy)-essigsäure, 2-(4-Isopropyl-4-methyl-5-oxo-2-imidazolin-2-yl)-4-methylbenzoesäuremethylester, 2-(4-Isopropyl-4-methyl-5-oxo-2-imidazolin-2-yl)-5-methylbenzoesäuremethylester, 2-(4-Isopropyl-4-methyl-5-oxo-2-imidazolin-2-yl)-nikotinsäure, 1-(3-Trifluormethylphenyl)-2-chlor-4-chlormethyl-2-pyrrolidon, 3,5-Dibrom-4-hydroxybenzonitril, 3,5-Dijod-4-hydroxybenzonitril oder 3-Isopropyl-(1H)-benzo-2,1,3-thiadiazin-2-on-2,2-dioxid enthält.

9. Fliessfähige herbizide Zusammensetzung nach Ansprüchen 1 und 7, dadurch gekennzeichnet, dass sie neben einem Harnstoffderivat der Formel I eine weitere feste, in Wasser schwerlösliche Wirksubstanz aus der Gruppe 5-(2,4-Dichlorphenoxy)-2-nitrobenzoesäuremethylester, N-(1-Methyl-2-methoxyäthyl)-N-chloracetyl-2,6-dimethylanilin, 2-Äthylamino-4-tert.-butylamino-6-methylthio-1,3,5-triazin, 2,4-bis-Isopropylamino-6-methylthio-1,3,5-triazin, 2,4-bis-Isopropylamino-6-äthylthio-1,3,5-triazin, N-[2-(2-Chloräthoxy)-phenylsulfonyl]-N'-(4-methoxy-6-methyl-1,3,5-triazin-2-yl)-harnstoff, N-(2-Chlorphenylsulfonyl)-N'-(4-methoxy-6-methyl-1,3,5-triazin-2-yl)-harnstoff, N-(2-Methoxycarbonylphenylsulfonyl)-N'-(4-methoxy-6-methyl-1,3,5-triazin-2-yl)-harnstoff enthält.

10. Fliessfähige herbizide Zusammensetzung nach Anspruch 1, dadurch gekennzeichnet, dass sie als Mono- und Di-(phenolpolyglykoläther)-phosphorsäureester der Formel II ein Triäthanolaminsalz eines Gemisches eines Mono- und Di-(phenolpolyglykoläther)-phosphorsäureesters der Formel II verwendet.

11. Fliessfähige herbizide Zusammensetzung nach Ansprüchen 1 und 10, dadurch gekennzeichnet, dass man Mono- und Di-(phenolpolyglykoläther)-phosphorsäureester der Formel II verwendet, in welcher $R_9$ n-Nonyl und Styryl, m 1 - 3 und n 6 - 26 bedeutet.

12. Fliessfähige herbizide Zusammensetzung nach Ansprüchen 1 und 2, dadurch gekennzeichnet, dass man als Mono- und Di-(phenolpolyglykoläther)-phosphorsäureester der Formel II Mono- und Di-(tristyrylphenolhexadecaglykoläther)-phosphorsäureester, Mono- und Di-(tristyrylphenoloctadecaglykoläther)-phosphorsäureester, Mono- und Di-(tristyrylphenolnonadecaglykoläther)-phosphorsäureester, Mono- und Di-(tristyrylphenoleicosaglykoläther)-phosphorsäureester, Mono- und Di-(tristyrylphenoldocosaglykoläther)-phosphorsäureester, Mono- und Di-(nonylphenolhexaglykoläther)-phosphorsäureester, Mono- und Di-(nonylphenoloctaglykoläther)-phosphorsäureester und Mono- und Di-(nonylphenolnonaglykoläther)-phosphorsäureester enthält.

13. Fliessfähige herbizide Zusammensetzung nach Ansprüchen 1 und 10, dadurch gekennzeichnet, dass sie als Mono- und Di-(phenolpolyglykoläther)-phosphorsäureesterderivat der Formel II das Triäthanolaminsalz eines Gemisches von Mono- und Di-(2,4,6-tristyrylphenolpolyglykoläther)-esterphosphat mit durchschnittlich 20 Äthylenglykoleinheiten im Polyglykolätherteil, das Triäthanolaminsalz eines Gemisches von Mono- und Di-(2,4,6-tristyrylphenolpolyglykoläther)-esterphosphat mit 16 - 20 Äthylenglykoleinheiten im Polyglykolätherteil, das Triäthanolaminsalz eines Gemisches von Mono- und Di-(2,4,6-tristyrylphenolpolyglykoläther)-esterphosphat mit durchschnittlich 18 Äthylenglykoleinheiten im Polyglykolätherteil, das Kaliumsalz eines Gemisches von Mono- und Di-(nonylphenolpolyglykoläther)-esterphosphat mit durchschnittlich 6 Äthylenglykoleinheiten im Polyglykolätherteil, das Kaliumsalz eines Gemisches von Mono- und Di-(nonylphenolpolyglykoläther)-esterphosphat mit durchschnittlich 8 Äthylenglykoleinheiten im Polyglykolätherteil oder das Kaliumsalz eines Gemisches von Mono- und Di-(nonylphenolpolyglykoläther)-esterphosphat mit durchschnittlich 9 Äthylenglykoleinheiten im Polyglykolätherteil enthält.

14. Fliessfähige herbizide Zusammensetzung nach Anspruch 1, dadurch gekennzeichnet, dass sie einen Polyglykoläther der Formel III enthält, der 1 - 3 Äthylenglykoleinheiten besitzt, enthält.

15. Fliessfähige herbizide Zusammensetzung nach Ansprüchen 1 und 14, dadurch gekennzeichnet, dass sie als Polyglykoläther der Formel III Nonylphenolmonoglykoläther, Nonylphenoldiglykoläther, Nonylphenoltriglykoläther oder Gemische solcher Nonylphenolglykoläther oder Oleyldiglykoläther enthält.

## Claims

1. A flowable herbicidal composition in the form of an aqueous suspension which consists of at least one solid disperse phase and a continuous aqueous phase, and which contains as active component at least one herbicidally active urea derivative, which composition comprises:

45 - 66 % by weight of one or more urea derivatives of the formula I

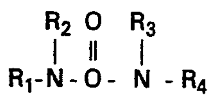

(I)

in which $R_1$ is benzothiazol-2-yl, 5-trifluoromethyl-1,3,4-thiadiazol-2-yl or a phenyl group of the formula

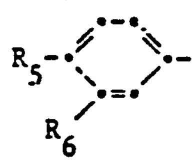

in which $R_5$ is hydrogen, chlorine, bromine or $C_1$-$C_4$-alkyl, $R_6$ is hydrogen, chlorine, trifluoromethyl or $C_1$-$C_4$-alkylaminocarbonyloxy, wherein however $R_5$ and $R_6$ cannot simultaneously be hydrogen, $R_2$ is hydrogen or, when $R_1$ is benzothiazol-2-yl or 5-trifluoromethyl-1,3,4-thiadiazol-2-yl, $R_2$ is methyl; $R_3$ is methyl, and $R_4$ is methyl or methoxy, or, when $R_1$ is benzothiazol-2-yl or 5-trifluoromethyl-1,3,4-thiadiazol-2-yl, $R_4$ is hydrogen, or of a mixture of one or more urea derivatives of the formula I and a further solid herbicidal active substance difficultly soluble in water;

2 - 10 % by weight of at least one mono- or di-(phenolpolyglycol ether)-phosphoric acid ester, or of a salt thereof, of the formula III

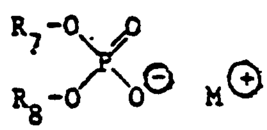

(II)

in which $R_7$ is a radical of the formula

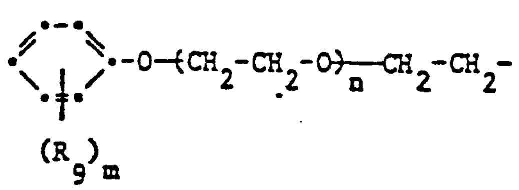

,

$R_8$ has the same meaning as $R_7$ or is hydrogen, and M is a proton, or a sodium, potassium, diethylammonium, triethylammonium, diethanolammonium or triethanolammonium cation, $R_9$ being hydrogen, $C_3$-$C_{10}$-alkyl or styryl, m an integer from 1 - 4, and n an integer from 4 - 40;

0.1 - 5 % by weight of at least one polyglycol ether of the formula III

$$R_{10}\text{-O-(-}CH_2\text{-}CH_2\text{-O-)}_p\text{-H} \qquad \text{(III)}$$

wherein $R_{10}$ is $C_{12}$-$C_{18}$-alkyl, $C_{12}$-$C_{22}$-alkanoyl, $C_{12}$-$C_{22}$-alkenoyl, $C_{12}$-$C_{22}$-alkadienonyl, $C_{12}$-$C_{22}$-alkatrienonyl, or phenyl mono- to trisubstituted by $C_3$-$C_{10}$-alkyl, $C_5$-$C_8$-cycloalkyl or styryl, and p is an integer from 1 - 6;

0 - 3 % by weight of an auxiliary dispersing agent;

0 - 10 % by weight of an anti-freezing agent; and

20 - 40 % by weight of water.

2. A flowable herbicidal composition according to claim 1 which comprises:

45 - 60 % by weight of one or more urea derivatives of the formula I, or of a mixture of one or more urea derivatives of the formula I with a further solid herbicide difficultly soluble in water;

2 - 5 % by weight of at least one mono- or di-(phenolpolyglycol ether)-phosphoric acid-ester, or of a salt thereof, of the formula II;

0.1 - 2 % by weight of at least one polyglycol ether of the formula III;

0 - 3 % by weight of an auxiliary dispersing agent;

0 - 10 % by weight of an anti-freezing agent; and

23 - 40 % by weight of water.

3. A flowable herbicidal composition according to claims 1 and 2, which contains a urea of the formula I in which $R_1$ is 3-chloro-4-methylphenyl, 3-trifluoromethylphenyl, 4-isopropylphenyl, 3,4-dichlorophenyl, 3-tert-.butylaminocarbonyloxyphenyl, 4-bromo-3-fluorophenyl or 4-bromophenyl, $R_2$ is hydrogen, $R_3$ is methyl, and $R_4$ is methyl or methoxy.

4. A flowable herbicidal composition according to claims 1 and 2, which contains a urea of the formula I in which $R_1$ is benzothiazol-2-yl or 5-trifluoromethyl-1,2,4-thiadiazol-2-yl, $R_2$ and $R_3$ are methyl, and $R_4$ is hydrogen.

5. A flowable herbicidal composition according to claims 1 and 2, which contains as herbicidally active urea derivative of the formula I: chlortoluron, fluometuron, isoproturon, diuron, karbutylate, linuron, chlorbromuron, metobromuron, thiazafluron or methabenzthiazuron.

6. A flowable herbicidal composition according to claims 1 and 2, which contains as urea derivative of the formula I: chlortoluron, metobromuron, fluometuron or isoproturon.

7. A flowable herbicidal composition according to claim 1, which contains, besides a urea derivative of the formula; a further solid, difficultly water-soluble, herbicidal active substance from the following classes: diphenyl ether derivatives, phenoxyphenoxyalkanecarboxylic acid derivatives, nitroanilines, haloacetanilides, O-aryloximes, triazines, benzamide derivatives, sulfonylureas, halogenated pyridyloxyalkanecarboxylic acids, imidazolinylbenzoic acid derivatives, imidazolinylnicotinic acid derivatives, N-substituted halopyrrolidinones, hydroxybenzonitriles and benzthiadiazinone derivatives.

8. A flowable herbicidal composition according to claims 1 and 7, which contains, besides a herbicidally active urea derivative of the formula I, a further solid, difficultly water-soluble, herbicidal active substance from the group: 5-(2,4-dichlorophenoxy)-2-nitrobenzoic acid methyl ester, 2-chloro-6-nitro-3-phenoxyaniline, 2-(2-chloro-4-trifluoromethylphenoxy)-5-nitrophenylphosphonic acid dimethyl ester, 2-[4-(3-trifluoromethyl-phenoxy)-phenyl]-3-ethoxycarbonyl-4-oxo-5-ethyl-5,6-dihydropyran, α-(4-[2,4-dichlorophenoxy)-phenoxy]-propionic acid methyl ester, N-(1-ethylpropyl)-2,6-dinitro-3,4-xylidine, N-(1-methyl-2-methoxyethyl)-N-chloroacetyl-2,6-dimethylaniline, 3,5-dibromo-4-hydroxybenzaldehyde-O-2,4-dinitrophenyloxime, 2-ethylamino-4-tert.-butylamino-6-methylthio-1,3,5-triazine, 2,4-bis-isopropylamino-6-methylthio-1,3,5-triazine, 2,4-bis-iso-propylamino-6-ethylthio-1,3,5-triazine, N-[3-(1-ethyl-1-methylpropyl)-5-isoxazolyl]-2,6-dimethoxybenzamide, N-[2-(2-chloroethoxy)-phenylsulfonyl]-N'-(4-methoxy-6-methyl-1,3,5-triazin-2-yl)urea, N-(2-chlorophenylsulfonyl)-N'-(4-methoxy-6-methyl-1,3,5-triazin-2-yl)urea, N-(2-methoxycarbonylphenylsulfonyl)-N'-(4-methoxy-6-methyl-1,3,5-triazin-2-yl)-urea, 2-(4-amino-3,5-dichloro-6-fluoropyrid-2-yloxy)-acetic acid, 2-(4-isopropyl-4-methyl-5-oxo-2-imidazolin-2-yl)-4-methylbenzoic acid methyl ester, 2-(4-isopropyl-4-methyl-5-oxo-2-imidazolin-2-yl)-5-methylbenzoic acid methyl ester, 2-(4-isopropyl-4-methyl-5-oxo-2-imidazolin-2-yl)-nicotinic acid, 1-(3-trifluoromethylphenyl)-2-chloro-4-chloromethyl-2-pyrrolidone, 3,5-dibromo-4-hydroxybenzonitrile, 3,5-diiodo-4-hydroxybenzonitrile or 3-isopropyl-(1H)-benzo-2,1,3-thiadiazin-2-one-2,2-dioxide.

9. A flowable herbicidal composition according to claims 1 and 7, which contains, besides a urea derivative of the formula I, a further solid, difficultly water-soluble, active substance from the group: 5-(2,4-di-chlorophenoxy)-2-nitrobenzoic acid methyl ester, N-(1-methyl-2-methoxyethyl)-N-chloroacetyl-2,6-dimethylaniline, 2-ethylamino-4-tert.-butylamino-6-methylthio-1,3,5-triazine, 2,4-bis-isopropylamino-6-methylthio-1,3,5-triazine, 2,4-bis-isopropylamino-6-ethylthio-1,3,5-triazine, N-[2-(2-chloroethoxy)-phenylsulfonyl]-N'-(4-methoxy-6-methyl-1,3,5-triazin-2-yl)urea, N-(2-chlorophenylsulfonyl)-N'-(4-methoxy-6-methyl-1,3,5-triazin-2-yl)urea and N-(2-methoxycarbonylphenylsulfonyl)-N'-(4-methoxy-6-methyl-1,3,5-triazin-2-yl)urea.

10. A flowable herbicidal composition according to claim I1 which contains, as mono- and di-(phenolpol-yglycol ether)-phosphoric acid ester of the formula II, a triethanolamine salt of a mixture of a mono- and di-(phenolpolyglycol ether)-phosphoric acid ester of the formula II.

11. A flowable herbicidal composition according to claims 1 and 10, wherein mono- and di-(phenolpolyglycol ether)-phosphoric acid esters of the formula II are used, in which $R_9$ is n-nonyl and styryl, m is 1 - 3, and n is 6 - 26.

12. A flowable herbicidal composition according to claims 1 and 2, which composition contains, as mono- and di-(phenolpolyglycol ether)-phosphoric acid esters of the formula II: mono- and di-(tristyrylphenolhexa-decaglycol ether)-phosphoric acid esters, mono- and di-(tristyryl phenoloctadecaglycol ether)-phosphoric acid esters, mono- and di-(tristyrylphenolnonadecaglycol ether)-phosphoric acid esters, mono- and di-(tristyryl-phenoleicosaglycol ether)-phosphoric acid esters, mono- and di-(tristyrylphenoldocosaglycol ether)-phosphoric acid esters, mono- and di-(nonylphenolhexaglycol ether)-phosphoric acid esters, mono- and di-(nonylphenoloctaglycol ether)-phosphoric acid esters and mono- and di-(nonylphenolnonaglycol ether)-phosphoric acid esters.

13. A flowable herbicidal composition according to claims 1 and 10, which composition contains, as mono- and di-(phenolpolyglycol ether)-phosphoric acid ester derivatives of the formula II, the triethanolamine salt of

a mixture of mono- and di-(2,4,6-tristyrylphenolpolyglycol ether)-ester phosphate having on average 20 ethylene glycol units in the polyglycol ether moiety, the triethanol amine salt of a mixture of mono- and di-(2,4,6-tristyrylphenolpolyglycol ether)-ester phosphate having 16 - 20 ethylene glycol units in the polyglycol ether moiety, the triethanolamine salt of a mixture of mono- and di-(2,4,6-tristyrylphenolpolyglycol ether)-ester phosphate having on average 18 ethylene glycol units in the polyglycol ether moiety, the potassium salt of a mixture of mono- and di-(nonylphenolpolyglycol ether)-ester phosphate having on average 6 ethylene glycol units in the polyglycol ether moiety, the potassium salt of a mixture of mono- and di-(nonylphenolpolyglycol ether)-ester phosphate having on average 8 ethylene glycol units in the polyglycol ether moiety or the potassium salt of a mixture of mono- and di-(nonylphenolpolyglycol ether)-ester phosphate having on average 9 ethylene glycol units in the polyglycol ether moiety.

14. A flowable herbicidal composition according to claim 1, which contains a polyglycol ether of the formula III which contains 1 - 3 ethylene glycol units.

15. A flowable herbicidal composition according to claims 1 and 14, which contains, as polyglycol ether of the formula III: nonylphenolmonoglycol ether, nonylphenoldiglycol ether, nonylphenoltriglycol ether, or mixtures of such nonylphenolglycol ethers, or oleyldiglycol ether.

**Revendications**

1. Composition herbicide fluide sous forme d'une suspension aqueuse constituée d'au moins une phase dispersée solide et d'une phase liquide continue et comportant comme constituant actif au moins un dérivé de l'urée ayant une activité herbicide, caractérisée en ce qu'elle comporte

de 45 à 66 % en poids d'un ou plusieurs dérivés de l'urée de formule I

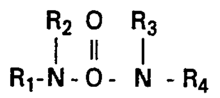

(I)

dans laquelle $R_1$ représente un benzothiazole-2-yl, un 5-trifluorométhyl-1,3,4-thiadiazole-2-yl ou un reste phényle de formule

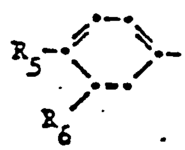

dans lequel $R_5$ représente un hydrogène, un chlore, un brome, ou un alkyle en $C_1$-$C_4$, $R_6$ représente un hydrogène, un chlore, un trifluorométhyle ou un alkylaminocarbonyloxy en $C_1$-$C_4$, $R_5$ et $R_6$ ne pouvant pas représenter en même temps un hydrogène, $R_2$ représente un hydrogène, ou, un méthyle, lorsque $R_1$ est un benzothiazole-2-yl ou un 5-trifluorométhyl-1,3,4-thiadiazole-2-yl, $R_3$ est un méthyle et $R_4$ représente un méthyle, un méthoxy ou un hydrogène, lorsque $R_1$ est un benzothiazole-2-yl ou un 5-trifluométhyl-1,3,4-thiadiazole-2-yl,

ou un mélange d'un ou plusieurs dérivés de l'urée de formule I et d'une autre substance active herbicide solide difficilement soluble dans l'eau,

de 2 à 10 % en poids d'au moins un mono- ou diester phosphorique d'un phénolpolyglycoléther, ou un sel de celui-ci, de formule II

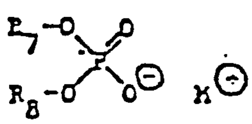

(II) .

dans laquelle $R_7$ est un reste de formule

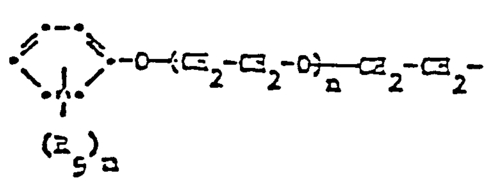

$R_8$ a la même signification que $R_7$ ou représente un hydrogène et M est un proton, un cation de sodium, de potassium, de diéthylammonium, de triéthylammonium, de diéthanolammonium ou de triéthanolammonium, $R_9$ représente un hydrogène, un alkyle en $C_3$-$C_{10}$ ou un styryle, m représente un nombre entier de 1 à 4 et n est un nombre entier de 4 à 40,

de 0,1 à 5 % en poids d'au moins un polyglycoléther de formule III

$$R_{10}\text{-O-(-CH}_2\text{-CH}_2\text{-O-)-}_p\text{-H} \qquad \text{(III)}$$

dans laquelle $R_{10}$ représente en alkyle en $C_{12}$-$C_{18}$, un alcanoyle en $C_{12}$-$C_{22}$, un alkénoyle en $C_{12}$-$C_{22}$, un alcadiénoyle en $C_{12}$-$C_{22}$, un alcatriénoyle en $C_{12}$-$C_{22}$ ou un phényle substitué de 1 à 3 fois par un alkyle en $C_3$-$C_{10}$, par un cycloalkyle en $C_5$-$C_8$ ou par un styryle et p est un nombre entier de 1 à 6,

de 0 à 3 % en poids d'un additif dispersant

de 0 à 10 % en poids d'un agent antigel et

de 20 à 40 % en poids d'eau.

2. Composition herbicide fluide selon la revendication 1 caractérisée en ce qu'elle comporte:

de 45 à 60 % en poids d'un ou plusieurs dérivés de l'urée de formule I ou d'un mélange d'un ou plusieurs dérivés de l'urée de formule I avec un autre herbicide solide difficilement soluble dans l'eau,

de 2 à 5 % en poids d'au moins un mono- ou diester phosphorique d'un phénolpolyglycoléther, ou d'un de ses sels, de formule II,

de 0,1 è 2 % en poids d'au moins un polyglycoléther de formule III

de 0 à 3 % en poids d'un additif dispersant

de 0 à 10 % en poids d'un agent antigel et

de 23 à 40 % en poids d'eau.

3. Composition herbicide fluide selon les revendications 1 et 2 caractérisée en ce qu'elle comporte une urée de formule I dans laquelle

$R_1$ représente un 3-chloro-4-méthylphényle, un 3-trifluorométhylphényle, un 4-isopropylphényle, un 3,4-dichlorophényle, un 3-tert.-butylaminocarbonyloxyphényle, un 4-bromo-3-fluorophényle ou un 4-bromophényle, $R_2$ représente un hydrogène, $R_3$ représente un méthyle et $R_4$ représente un méthyle ou un méthoxy.

4. Composition herbicide fluide selon les revendications 1 et 2 caractérisée en ce qu'elle comporte une urée de formule I dans laquelle $R_1$ représente un benzothiazole-2-yl ou un 5-trifluorométhyle-1,2,4-thiadiazole-2-yl, $R_2$ et $R_3$ sont un méthyle et $R_4$ est un hydrogène.

5. Composition herbicide fluide selon les revendications 1 et 2 caractérisée en ce qu'elle comporte comme dérivé de l'urée à action herbicide de formule I le Chlortoluron, le Fluometuren, l'Isoproturon, le Diuron, le Karbutylat, le Linuron, le Chlorbromuron, le Metobromuron, le Thiazafluron ou le Methabenzthiazuron.

6. Composition herbicide fluide selon les revendications 1 et 2 caractérisée en ce qu'elle comporte comme dérivé de l'urée de formule I le Chlortoluron, le Metobromuron, le Fluometuron ou l'Isoproturon.

7. Composition herbicide fluide selon la revendication 1 caractérisée en ce qu'elle comporte, en plus d'un dérivé de l'urée de formule I, une autre substance active herbicide solide, difficilement soluble dans l'eau, choisie parmi la famille des dérivés du diphényléther, des dérivés des acides phénoxyphénoxyalcanecarboxyliques, des nitroanilines, des halogénoacétanilides, des O-aryloximes, des triazines, des dérivés du benzamide, des sulfonylurées, des acides pyridyloxyalcanecarboxyliques halogénés, des dérivés des acides imidazolinylbenzoïques, des dérivés des acides imidazolinylnicotiniques, des halogénopyrrolidones N-substituées, des hydroxybenzonitriles et des dérivés de la benzthiadiazinone.

8. Composition herbicide fluide selon les revendications 1 et 7 caractérisée en ce qu'elle comporte, en plus d'un dérivé de l'urée à activité herbicide de formule I, une autre substance active herbicide solide, difficilement soluble dans l'eau, choisi parmi le groupe constitué par l'ester méthylique de l'acide 5-(2,4-dichlorophénoxy)-2-nitrobenzoïque, la 2-chloro-6-nitro-3-phénoxyaniline, l'ester diméthylique de l'acide 2-(2-chloro-4-trifluorométhylphénoxy)-5-nitrophénylphosphonique, le 2-[4-(3-trifluorométhylphénoxy)-phényl]-3-éthoxycarbonyl-4-oxo-5-éthyl-5,6-dihydropyranne, l'ester méthylique de l'acide α-[4-(2,4-dichlorophénoxy)-phénoxy]-propionique, la N-(1-éthylpropyl)-2,6-dinitro-3,4-xylidine, la N-(1-méthyl-2-méthoxyéthyl)-N-chloroacétyl-2,6-diméthylaniline, la 3,5-dibromo-4-hydroxybenzaldéhyde-O-2,4-dinitrophényloxime, la 2-éthylamino-4-tert.-butylamino-6-méthylthio-1,3,5-triazine, la 2,4-bis-isopropylamino-6-méthylthio-1,3,5-triazine, la 2,4-bis-isopropylamino-6-éthylthio-1,3,5-triazine, le N-[3-(1-éthyl-1-méthylpropyl)-5-isoxazolyl]-2,6-diméthoxybenzamide, la N-[2-(2-chloroéthoxy)-phénylsulfonyl]-N'-(4-méthoxy-6-méthyl-1,3,5-triazine-2-yl)-urée, la N-(2-chlorophénylsulfonyl)-N'-(4-méthoxy-6-méthyl-1,3,5-triazine-2-yl)-urée, la N-(2-méthoxycarbonylphénylsulfonyl)-N'-(4-méthoxy-6-méthyl-1,3,5-triazine-2-yl)-urée, l'acide 2-(4-amino-3,5-dichloro-6-fluoropyrid-2-yloxy)-acétique, l'ester méthylique de l'acide 2-(4-isopropyl-4-méthyl-5-oxo-2-imidazoline-2-yl)-4-méthylbenzoïque, l'ester méthylique de l'acide 2-(4-isopropyl-4-méthyl-5-oxo-2-imidazoline-2-yl)-5-méthylbenzoïque, l'acide 2-(4-isopropyl-4-méthyl-5-oxo-2-imidazoline-2-yl)-nicotinique, la 1-(3-trifluorométhylphényl)-2-chloro-4-chlorométhyl-2-pyrrolidone, le 3,5-dibromo-4-hydroxybenzonotrile, le 3,5-diiodo-4-hydroxybenzonitrile ou le 3-isopropyl-(1H)-benzo-2,1,3-thiadiazine-2-one-2,2-dioxyde.

9. Composition herbicide fluide selon les revendications 1 et 7 caractérisée en ce qu'elle comporte, en plus d'un dérivé de l'urée de formule I, une autre matière active solide, difficilement soluble dans l'eau, choisie parmi le groupe constitué par l'ester méthylique de l'acide 5-(2,4-dichlorophénoxy)-2-nitrobenzoïque, la N-(1-méthyl-2-méthoxyéthyl)-N-chloroacétyl-2,6-diméthylaniline, la 2-éthylamino-4-tert.-butylamino-6-méthylthio-1,3,5-triazine, la 2,4-bis-isopropylamino-6-méthylthio-1,3,5-triazine, la 2,4-bis-isopropylamino-6-éthylthio-1,3,5-triazine, la N-[2-(2-chloroéthoxy)-phénylsulfonyl]-N'-(4-méthoxy-6-méthyl-1,3,5-triazine-2-yl)-urée, la N-(2-chlorophénylsulfonyl)-N'-(4-méthoxy-6-méthyl-1,3,5-triazine-2-yl)-urée, la N-(2-méthoxycarbonylphénylsulfonyl)-N'-(4-méthoxy-6-méthyl-1,3,5-triazine-2-yl)-urée.

10. Composition herbicide fluide selon la revendication 1 caractérisée en ce qu'elle utilise comme mono- et diester phosphorique de phénolpolyglycoléther de formule II un sel de triéthanolamine d'un mélange d'un mono- et diester phosphorique de phénolpolyglycoléther de formule II.

11. Composition herbicide fluide selon les revendications 1 et 10 caractérisée en ce que l'on utilise un mono- et diester phosphorique de phénolpolyglycoléther de formule II dans laquelle $R_9$ représente le n-nonyle et le styryle, m varie de 1 à 3 et n varie de 6 à 26.

12. Composition herbicide fluide selon les revendications 1 et 2 caractérisée en ce qu'elle comporte comme mono- et diester phosphorique de phénolpolyglycoléther de formule II le mono- et diester phosphorique de tristyrylphénolhexadécaglycoléther, le mono- et diester phosphorique de tristyrylphénoloctadécaglycoléther, le mono- et diester phosphorique de tristyrylphénolnonadécaglycoléther, le mono- et diester phosphorique de tristyrylphénoleicosaglycoléther, le mono- et diester phosphorique de tristyrylphénoldocosaglycoléther, le mono- et diester phosphorique de nonylphénolhexaglycoléther, le mono- et diester phosphorique de nonylphénoloctaglycoléther et le mono- et diester phosphorique de nonylphénolnonaglycoléther.

13. Composition herbicide fluide selon les revendications 1 et 10 caractérisée en ce qu'elle comporte comme dérivé mono- et diester phosphorique de phénolpolyglycoléther de formule II le sel de triéthanolamine d'un mélange de mono- et diester phosphate de 2,4,6-tristyrylphénolpolyglycoléther avec en moyenne 20 unités d'éthylèneglycol dans la partie polyglycoléther, le sel de triéthanolamine d'un mélange de mono- et diester phosphate de 2,4,6-tristyrylphénolpolyglycoléther avec de 16 à 20 unités d'éthylèneglycol dans la partie polyglycoléther, le sel de triéthanolamine d'un mélange de mono- et diester phosphate de 2,4,6-tristyrylphénolpolyglycoléther avec en moyenne 18 unités d'éthylèneglycol dans la partie polyglycoléther, le sel de potassium d'un mélange de mono- et diester phosphate de nonylphénolpolyglycoléther avec en moyenne 6 unités d'éthylèneglycol dans la partie polyglycoléther, le sel de potassium d'un mélange de mono- et diester phosphate de nonylphénolpolyglycoléther avec en moyenne 8 unités d'éthylèneglycol dans la partie polyglycoléther ou le sel de potassium d'un mélange de mono- et diester phosphate de nonylphénolpolyglycoléther avec en moyenne 9 unités d'éthylèneglycol dans la partie polyglycoléther.

14. Composition herbicide fluide selon la revendication 1 caractérisée en ce qu'elle comporte un polyglycoléther de formule III, qui a de 1 à 3 unités d'éthylèneglycol.

15. Composition herbicide fluide selon les revendications 1 et 14 caractérisée en ce qu'elle comporte comme polyglycoléther de formule III le nonylphénolmonoglycoléther, le nonylphénoldiglycoléther, le nonylphénoltriglycoléther ou des mélanges de tels nonylphénolglycoléthers ou l'oléyldiglycoléther.